# EUROPEAN PATENT APPLICATION

(11) **EP 4 686 685 A1**
(43) Date of publication of application: **04.02.2026**
(21) Application number: 25192516.0
(22) Date of filing: 29.07.2025
(51) Int. Cl.: B66B 1/34, B66B 13/22

(54) **MODULAR ELEVATOR SYSTEM WITH CONFIGURABLE ARCHITECTURE**

(30) Priority: 31.07.2024 US 202418789805
(71) Applicant: Otis Elevator Company, Farmington, Connecticut 06032 (US)
(72) Inventor: Hwang, KyoungPil, Farmington, CT, 06032 (US); Cabush, David, Farmington, CT, 06032 (US); Tetsill, Joanne Hepburn, Farmington, CT, 06032 (US)
(74) Representative: Winter, Brandl - Partnerschaft mbB

(57) **Abstract**

A method and elevator system includes a main module that is operable in a configuration mode, a detection mode, and an elevator operation mode. At least one sub-module is connectable to the main module when in the configuration mode, and the sub-module has an initialization mode and a recognized mode. At least one activation tool is selectively actuated by a user to activate the detection mode. In response to activation of the detection mode, the main module returns to the configuration mode and initiates communication with the sub-module while in the initialization mode. In response to communication from the main module, the sub-module communicates a plurality of sub-module characteristics to the main module. In response to review and certification of the plurality of sub-module characteristics, the main module accepts the sub-module as an approved sub-module and the sub-module enters the recognized mode.

## Description

### BACKGROUND

Elevator systems may include a safety system having a main module that controls safety output actuation. Over time, the safety system may need to provide additional functions, which would require additional sub-modules to be added. Typically, this feature is implemented by designing optimized hardware and software at the architecture level. However, this approach necessitates frequent software updates and hardware modifications when additional modules are required and added.

### SUMMARY

An illustrative example elevator system includes: a main module operable in a configuration mode, a detection mode, and an elevator operation mode; at least one sub-module connectable to the main module in the configuration mode, wherein the at least one sub-module has an initialization mode and a recognized mode; at least one activation tool selectively actuated by a user to activate the detection mode, and wherein: in response to activation of the detection mode, the main module returns to the configuration mode and initiates communication with the at least one sub-module while in the initialization mode; in response to communication from the main module, the at least one sub-module communicates a plurality of sub-module characteristics to the main module; and in response to a review and certification of the plurality of sub-module characteristics, the main module accepts the at least one sub-module as an approved sub-module and the at least one sub-module enters the recognized mode.

In a further non-limiting embodiment of any system, the at least one sub-module comprises a plurality of sub-modules that are connectable to the main module sequentially.

In a further non-limiting embodiment of any system, the configuration mode comprises an initial set-up or construction mode for an elevator.

In a further non-limiting embodiment of any system, once all sub-modules are in the recognized mode, the main module enters the elevator operation mode wherein additional sub-modules are not permitted to be added.

In a further non-limiting embodiment of any system, in response to the user selectively actuating the at least one activation tool, the main module exits the elevator operation mode and enters the detection mode to recognize an additional sub-module, and wherein in response to review and certification of the plurality of sub-module characteristics for the additional sub-module, the main module accepts the additional sub-module as an approved sub-module without requiring any software updates or hardware modification.

In a further non-limiting embodiment of any system, the main module comprises a main safety module having a plurality of safety inputs and at least one safety actuator output, and wherein the at least one sub-module comprises a plurality of safety sub-modules that each have unique safety inputs and safety outputs that are communicated separately to the main module.

In a further non-limiting embodiment of any system, the plurality of sub-module characteristics include one or more of the following: identifier information; certification information; total number of inputs and outputs associated with the at least one sub-module.

In a further non-limiting embodiment of any system, once the at least one sub-module is in the recognized mode, the main module and the at least one sub-module periodically communicate input/output signal status, and in response to the main module determining that the at least one sub-module has failed to provide requested input/output signal status, the main module shuts down an associated safety output.

In a further non-limiting embodiment of any system, the detection mode is enabled at the main module and comprises a user input via the at least one activation tool to generate a random output, and in response to the user repeating the random output, the main module enters the detection mode.

In a further non-limiting embodiment of any system, the user input comprises manual operation of an input device and the random output comprises a random pattern of illumination events.

An illustrative example elevator system includes: a main safety module comprising one or more controllers, the main safety module operable in a configuration mode, a detection mode, and an elevator operation mode, wherein the main safety module has a plurality of safety inputs and at least one safety actuator output; a plurality of safety sub-modules connectable to the main safety module in the configuration mode, wherein each sub-module has an initialization mode and a recognized mode, and wherein each safety sub-module has unique safety inputs and safety outputs that are communicated separately to the main safety module; at least one activation tool selectively actuated by a user to activate the detection mode, and wherein: in response to activation of the detection mode, the main safety module returns to the configuration mode and initiates communication with one safety sub-module of the plurality of safety sub-modules while in the initialization mode; in response to communication from the main safety module, the one safety sub-module communicates a plurality of safety sub-module characteristics to the main safety module; and in response to review and certification of the plurality of safety sub-module characteristics for the one safety sub-module, the main safety module accepts the one safety sub-module as an approved safety sub-module and the one safety sub-module enters the recognized mode.

In a further non-limiting embodiment of any system, each safety sub-module is connectable to the main safety module sequentially.

In a further non-limiting embodiment of any system, the configuration mode comprises an initial set-up or construction mode for an elevator, and wherein: in response to all safety sub-modules entering the recognized mode, the main safety module enters the elevator operation mode wherein additional safety sub-modules are not permitted to be added; and in response to the user selectively actuating the at least one activation tool, the main safety module exits the elevator operation mode and enters the detection mode to recognize an additional safety sub-module, and wherein in response to review and certification of the plurality of safety sub-module characteristics for the additional safety sub-module, the main safety module accepts the additional safety sub-module as an approved safety sub-module without requiring any software updates or hardware modification.

In a further non-limiting embodiment of any system, once the one safety sub-module is in the recognized mode, the main safety module and the one safety sub-module periodically communicate input/output signal status, and in response to the main safety module determining that the one safety sub-module has failed to provide requested input/output signal status, the main safety module shuts down an associated safety output.

An illustrative example method includes: providing a main module for an elevator that is operable in a configuration mode, a detection mode, and an elevator operation mode; connecting one sub-module of a plurality of sub-modules to the main module when in the configuration mode, wherein the plurality of sub-modules have an initialization mode and a recognized mode; selectively actuating at least one activation tool to activate the detection mode; in response to activation of the detection mode, returning the main module to the configuration mode and initiating communication with the one sub-module while in the initialization mode; in response to a communication from the main module, the one sub-module communicates a plurality of sub-module characteristics to the main module; and in response to review and certification of the plurality of sub-module characteristics, the main module accepts the one sub-module as an approved sub-module and the one sub-module enters the recognized mode.

In a further non-limiting embodiment of any method, the method incudes connecting each sub-module to the main module in sequence.

In a further non-limiting embodiment of any method, the method incudes, once all sub-modules are in the recognized mode, entering the elevator operation mode wherein additional sub-modules are not permitted to be added, in response to a user selectively actuating the at least one activation tool, exiting the elevator operation mode and entering the detection mode to recognize an additional sub-module, and in response to review and certification of the plurality of sub-module characteristics for the additional sub-module, accepting the additional sub-module as an approved sub-module without requiring any software updates or hardware modification.

In a further non-limiting embodiment of any method, the method incudes, once the one sub-module is in the recognized mode, periodically communicating input/output signal status from the one sub-module to the main module and, and in response to a determination that the one sub-module has failed to provide requested input/output signal status, shutting down an associated safety output.

In a further non-limiting embodiment of any method, the main module comprises a main safety module having a plurality of safety inputs and at least one safety actuator output, and wherein the plurality of sub-modules comprise a plurality of safety sub-modules that each have unique safety inputs and safety outputs, and including separately communicating safety inputs and safety outputs from each safety sub-module to the main module.

In a further non-limiting embodiment of any method, the method incudes enabling the detection mode at the main module via selective user input to the at least one activation tool to generate a random output, and in response to a user repeating the random output, entering the detection mode.

The various features and advantages of an example embodiment will become apparent to those skilled in the art from the following detailed description. The drawings that accompany the detailed description can be briefly described as follows.

### BRIEF DESCRIPTION OF THE DRAWINGS

Figure 1 schematically illustrates selected portions of an elevator system and associated control system.
Figure 2 schematically illustrates a portion of the control system that comprises a modular safety system with configurable architecture.
Figure 3 schematically illustrates an example activation mode for the modular safety system of Figure 2.
Figure 4 shows an example communication protocol between a main module and a sub-module of the modular safety system of Figure 2.
Figure 5 is a flowchart diagram of an example method of configuring the modular safety system of Figure 2.

### DETAILED DESCRIPTION

Embodiments of this disclosure provide an elevator system with a communication protocol and a control system architecture that supports pre-configured sub-modules in a "plug-and-play" arrangement. In implementations, the communication protocol and control system architecture allows the pre-configured sub-modules to be simply plugged-in and detected without requiring software updates, in order to add the sub-modules to the system.

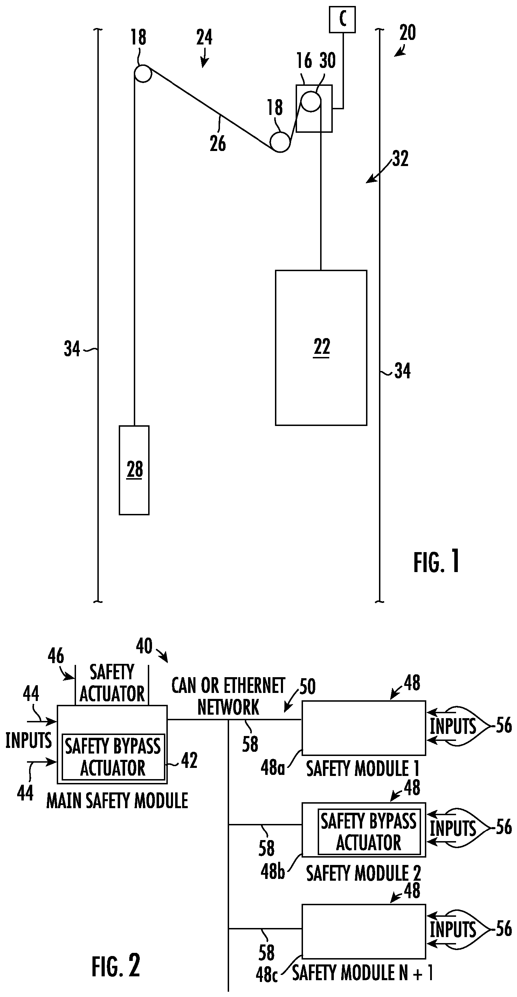

Figure 1 schematically illustrates selected portions of an elevator system 20. An elevator car 22 is supported by a roping arrangement or suspension assembly 24 that includes a plurality of suspension members 26. In one example, the elevator system 20 is a traction-based system in which a controller of a control system C controls operation of a machine 16 to cause selected movement of the elevator car 22. The elevator car 22 is coupled to a counterweight 28 by the suspension members 26. The suspension members 26 are driven by the machine 16 around a traction sheave 30, as well as any additional deflector sheaves 18, as the elevator car 22 moves within a hoistway 32 between landings or levels. The hoistway 32 may be situated in a variety of locations within a building, depending on the building configuration, and includes a plurality of walls 34.

In implementations, the subject disclosure provides for a factory process configuration to provide a control system by connecting one or more sub-modules to a main module for an elevator system. The sub-modules can be any type of sub-module that would be suitable for use in an elevator control system.

In one example shown in Figure 2, the control system comprises a modular system 40 that allows for the addition or removal of sub-modules as part of a factory configuration. This includes combining a set of multi-purpose sub-modules to create a wide range of system architectures. This is because it is important to define and secure the system architecture at the factory level, linking it to an approved and certified configuration.

In implementations, it may also be possible to add additional sub-modules on a job site. This type of arrangement may comprise a plug-and-play system in the field.

In implementations, an example control system C includes a safety system 40 (Figure 2) that has a main module 42 that may accommodate various safety inputs 44 and is responsible for activating and deactivating one or more safety outputs 46, e.g., safety actuation, for the elevator system.

In implementations, one or more sub-modules 48 are connected to the main module 42 via a network 50. In one example, the network 50 comprises a CAN or Ethernet network; however, other networks could also be used. In implementations, during set-up of an elevator system during building construction, one or more sub-modules 48 are added during a configuration mode.

Over time, the system may require additional input signals or a bypass function, which can be added as additional sub-modules 48. As such, the system 40 is configured to accept any number, e.g., N + 1, of modules.

In implementations, the subject disclosure enables the addition of extra sub-modules 48 on the fly by following a specific process, where the main module 42 retains additional safety module information and continually monitors a state of health and safety input states for each of the sub-modules 48.

In implementations, the main safety module 42 has a special mode for recognizing the addition of safety sub-modules 48 and associated safety input states.

Figure 2 schematically illustrates the main module 42, which in implementations, is operable at least in a configuration mode, a detection mode, and an elevator operation mode.

In one example, at least one sub-module 48 is connectable to the main module 42 when the main module 42 is in the configuration mode. Each sub-module 48 has at least an initialization mode and a recognized mode.

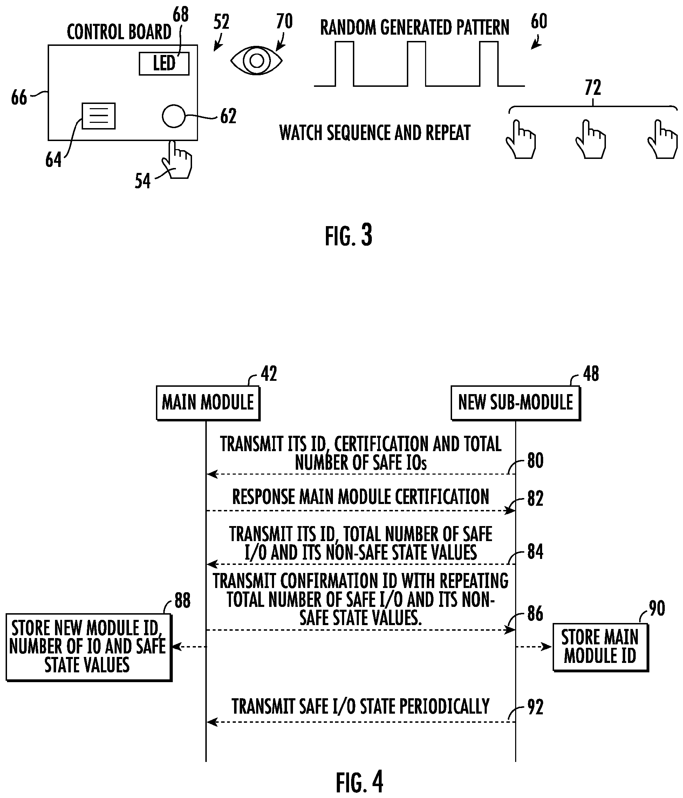

In one example, at least one activation tool 52 is selectively actuated by a user 54 to activate the detection mode as shown in Figure 3.

In implementations, in response to activation of the detection mode, the main module 42 returns to the configuration mode and initiates communication with the sub-module 48 while in the initialization mode.

In implementations, in response to communication from the main module 42, the sub-module 48 communicates a plurality of sub-module characteristics to the main module 42.

In implementations, the plurality of sub-module characteristics may include one or more of identifier information, certification information, total number of inputs and outputs associated with the at least one sub-module, etc.

In implementations, in response to a review and certification of the plurality of sub-module characteristics, the main module 42 accepts the sub-module 48 as an approved sub-module, and the sub-module enters the recognized mode.

In implementations, each sub-module is connectable to the main module 42 sequentially. In other words, each sub-module 48 is connected one after the other in sequence, until all sub-modules 48 have been connected, while the main module 42 is in the configuration mode.

In one example, the configuration mode comprises an initial set-up or construction mode for the elevator system 20. For example, when the elevator 22 is being installed within a building, the main module 42 is installed and then powered up. A first sub-module 48a is then connected to the main module 42 and goes through the verification process. Once the first sub-module 48a is verified, a second sub-module 48b is subsequently connected and goes through the verification process. Once the second sub-module 48b is verified, an additional sub-module 48c is subsequently connected and goes through the verification and registration process/mode. This process continues until all sub-modules have been connected and verified/recognized.

In implementations, the main module 42 will maintain a record of registered devices until the subsequent registration mode is initiated, which prevents an accidental deletion of a registered module within the safety system. Additionally, during the registration mode, the main module 42 will not only check and validate new device registrations, but also monitor the regular messages from each device for validation. If a regular message is not received, the system will initiate the deletion of the respective device. Upon completion of the registration process, the main module 42 will visually indicate the total count of registered devices by blinking or using a light source 68 (see Figure 3), e.g., a LED indicator.

In implementations, once all sub-modules 48 are in the recognized mode, the main module 42 enters the elevator operation mode where the elevator system 20 operates normally by transporting passengers and cargo between various levels in the building. In implementations, when the elevator is in the elevator operation mode, additional sub-modules 48 are not permitted to be added, e.g., the control system is in a lockout mode, to prevent any additional modules from being added without specific authorization.

However, as discussed above, over time additional sub-modules 48 may need to be added to provide additional functionality. In implementations, in response to the user or mechanic 54 selectively actuating the activation tool 52, the main module 42 exits the elevator operation mode and enters the detection mode to recognize an additional sub-module 48. In response to a review and certification of the plurality of sub-module characteristics for the additional sub-module, the main module 42 accepts the additional sub-module as an approved sub-module. This acceptance occurs without requiring any software updates or hardware modification, which reduces time and cost for adding increased functionality.

In implementations, for example, after operating in the elevator operation mode with the sub-modules 48 that were installed in the factory process, it may be determined that two additional sub-modules 48 should be added. Or, after the factory installation process has been completed, but before operating on-site, it may be determined that two additional sub-modules 48 should be added. In either example, a mechanic would then activate the detection mode and add the first new sub-module 48 to the system. The system would detect the first new sub-module 48 and then review, certify, and recognize/register the first new submodule 48.

In one example, once registered, the system may automatically return to an operational mode where new sub-modules cannot be added. As such, to add the second new sub-module 48, the mechanic would have to repeat the process described above, e.g., the mechanic would have to reactivate the detection mode.

In another example, when more than one sub-module 48 is to be added, the system may be configured to require the mechanic to deactivate the detection mode once all new sub-modules 48 have been added, and then the system could automatically return to the operational mode or the mechanic may reactivate the operational mode.In implementations, once each sub-module 48 is in the recognized mode, the main module 42 and the sub-modules 48 periodically communicate regarding input/output signal status, and in response to the main module determining that a sub-module 48 has failed to provide requested input/output signal status, the main module 42 shuts down an associated safety output.

In implementations, as shown in Figure 2, the main module 42 comprises a main safety module having a plurality of safety inputs 44 and at least one safety actuator output 46. In implementations, at least some sub-modules 48 comprise safety sub-modules that each have unique safety inputs 56 and safety outputs 58 that are communicated separately to the main module 42 via the network 50.

Figure 3 shows an example of how to activate the detection mode with the activation tool 52 (e.g. button, toggle, lever, screen interface, smart device) to avoid any impermissible activations. This activation method allows the main module to recognize the additional safety sub-modules and associated safety inputs without requiring any software modifications. In other words, the system provides a simple plug-in detection.

Thus, the detection mode is designed to detect additional safety systems such that they can be added into the configuration without software changes. Once an additional sub-module is added, the main safety module will periodically check the associated health state of the sub-module. If the sub-module fails to provide the requested information, the main safety module 42 will shut down the associated safety output.

In one example, to activate the detection mode, the user 54, e.g., a mechanic or technician, is the one to enable this mode. This selective, manual input facilitates preventing sub-modules from being added that are not allowed. In implementations, the user 54 may enable the detection mode from the main safety module 42 by following a specific sequence.

For example, the detection mode comprises a user input via the activation tool 52 to generate a random output 60. In implementations, in response to the user 54 repeating the random output, the main module 42 enters the detection mode.

In one example, the user input comprises manual operation of an input device, e.g. button, screen interface etc., and the random output comprises a random pattern of illumination events.

For example, the user may initiate the detection mode by holding down one or more buttons 62 for an extended period of time, or may use a menu 64 on a touch screen or control board 66 of the tool 52. The button 62 and/or menu 64 may be associated with the control board 66, which may be part of the main module 42. In one example, the control board 66 may also be associated with one or more light sources 68, e.g. LEDs or other similar types of lights.

In one example, to validate the user's intention to enable the detection mode, the system displays a randomly generated blinking pattern with the light sources 68 as viewed 70 on a display (e.g., 0=short off and 1= short on: starts with 1; ends with 1; and has specified number of random values in between, ensuring no consecutive 1s or 0s appear more than a desired number of times). The user 54 then enters the same pattern (see 72) using the button or screen interface, and if the user input matches with the system's challenge message, e.g., the randomly generated blinking pattern, the display blinks/illuminates with the pre-defined pattern indicating that the detection mode is activated. As such, the user's intention to activate the detection mode is validated.

In implementations, once the detection mode is activated, the control board 66 monitors the communication channel, comparing the newly identified sub-module IDs with previously identified ones. When a new ID is identified, the module initiates the registration process.

In implementations, the main module 42 will recognize a message from the newly added sub-module 48 as long as the sub-module follows pre-defined message templates. Upon detecting a new additional sub-module, the safety module will store the new device information into memory, e.g., EEPROM, to ensure that the module does not lose its dependent module information during a power cycle or reset event.

Figure 4 illustrates a sequence diagram that explains details of the main module 42 and sub-module 48 verifying each other's identity and the associated sub-module's safety signal information. When a new sub-module 48 is added and powered up, the sub-module is in the initialization mode. After the main module 42 has left the detection mode and re-entered the configuration mode, and while the sub-module is in the initialization mode, the main module 42 has realized there is a new sub-module 48 which then transmits a unique message back to the main module 42 identifying the sub-module as a new device and identifying the safety inputs that are to be communicated to the main module (see 80). For example, the new sub-module 48 may transmit an identification code, certification, and a total number of safe input/outputs.

The main module 42 then receives this message, and the main module 42 reviews the information, and if the information is validated, the main module 42 responds with a main module certification as indicated at 82.

Next, the sub-module then transmits additional information including the identification code, total number of safe input/outputs, and non-safe state values, as indicated at 84.

Then, the main module 42 receives this additional information and after verification, the main module transmits a confirmation ID and repeats the total number of safe input/outputs, and non-safe state values, as indicated at 86.

The main module 42 then stores the new sub-module ID and number of input/output and safe state values, as indicated at 88. The sub-module 48 then stores the main module ID, as indicated at 90.

Finally, after the sub-module has been validated, the sub-module enters the recognized mode, and the sub-module 48 periodically transmits safety input/output states, as indicated at 92. This allows the main module 42 to monitor the health of each of the sub-modules.

In implementations, the control system C and associated safety system 40 may include one or more controllers that may comprise a processor, memory, and one or more input and/or output (I/O) device interface(s) that are communicatively coupled via a local interface. The local interface can include, for example but not limited to, one or more buses and/or other wired or wireless connections. The controllers may comprise a hardware device for executing software, particularly software stored in memory. The controller may be a custom made or commercially available processor, a central processing unit (CPU), an auxiliary processor among several processors associated with the computing device, a semiconductor based microprocessor (in the form of a microchip or chip set) or generally any device for executing software instructions. The memory can include any one or combination of volatile memory elements (e.g., random access memory) and/or nonvolatile memory. The software in the memory may include one or more separate programs, each of which includes an ordered listing of executable instructions for implementing logical functions. The one or more controllers can be configured to execute software stored within the memory, to communicate data to and from the memory, and to generally control operations of the computing device pursuant to the software.

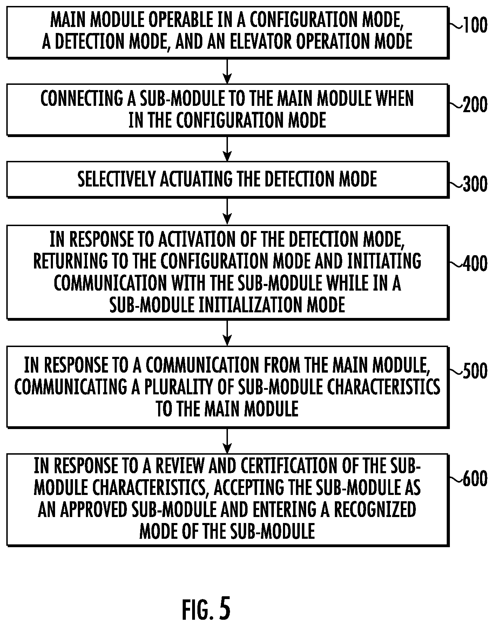

In implementations, a method of configuring the safety system 40 may include the following steps as identified in Figure 5.

As indicated at 100, the method may include the step of providing a main module for an elevator that is operable in a configuration mode, a detection mode, and an elevator operation mode.

As indicated at 200, the method may include the step of connecting one sub-module of a plurality of sub-modules to the main module when in the configuration mode, wherein the plurality of sub-modules have an initialization mode and a recognized mode.

As indicated at 300, the method may include the step of selectively actuating at least one activation tool to activate the detection mode.

As indicated at 400, the method may include the step of, in response to activation of the detection mode, returning the main module to the configuration mode and initiating communication with the one sub-module while in the initialization mode;

As indicated at 500, the method may include the step of, in response to a communication from the main module, the one sub-module communicates a plurality of sub-module characteristics to the main module; and

As indicated at 600, the method may include the step of, in response to review and certification of the plurality of sub-module characteristics, the main module accepts the one sub-module as an approved sub-module and the one sub-module enters the recognized mode.

The method may include any of the following steps either alone or in any combination.

The method may include connecting each sub-module to the main module in sequence.

The method may include: once all sub-modules are in the recognized mode, entering the elevator operation mode wherein additional sub-modules are not permitted to be added; in response to a user selectively actuating the at least one activation tool, exiting the elevator operation mode and entering the detection mode to recognize an additional sub-module; and in response to review and certification of the plurality of sub-module characteristics for the additional sub-module, accepting the additional sub-module as an approved sub-module without requiring any software updates or hardware modification.

The method may include, once the one sub-module is in the recognized mode, periodically communicating input/output signal status from the one sub-module to the main module and, and in response to a determination that the one sub-module has failed to provide requested input/output signal status, shutting down an associated safety output.

The method may include, wherein the main module comprises a main safety module having a plurality of safety inputs and at least one safety actuator output, and wherein the plurality of sub-modules comprise a plurality of safety sub-modules that each have unique safety inputs and safety outputs, and the method further including separately communicating safety inputs and safety outputs from each safety sub-module to the main module.

The method may include enabling the detection mode at the main module via selective user input to the at least one activation tool to generate a random output, and in response to a user repeating the random output, entering the detection mode.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. An elevator system comprising:
a main module operable in a configuration mode, a detection mode, and an elevator operation mode;
at least one sub-module connectable to the main module in the configuration mode, wherein the at least one sub-module has an initialization mode and a recognized mode;
at least one activation tool selectively actuated by a user to activate the detection mode, and wherein:
in response to activation of the detection mode, the main module returns to the configuration mode and initiates communication with the at least one sub-module while in the initialization mode;
in response to communication from the main module, the at least one sub-module communicates a plurality of sub-module characteristics to the main module; and
in response to a review and certification of the plurality of sub-module characteristics, the main module accepts the at least one sub-module as an approved sub-module and the at least one sub-module enters the recognized mode.

2. The elevator system of claim 1, wherein the at least one sub-module comprises a plurality of sub-modules that are connectable to the main module sequentially.

3. The elevator system of claim 2, wherein the configuration mode comprises an initial set-up or construction mode for an elevator.

4. The elevator system of claim 3, wherein, once all sub-modules are in the recognized mode, the main module enters the elevator operation mode wherein additional sub-modules are not permitted to be added; or
wherein, in response to the user selectively actuating the at least one activation tool, the main module exits the elevator operation mode and enters the detection mode to recognize an additional sub-module, and wherein in response to review and certification of the plurality of sub-module characteristics for the additional sub-module, the main module accepts the additional sub-module as an approved sub-module without requiring any software updates or hardware modification.

5. The elevator system of claim 1, wherein the main module comprises a main safety module having a plurality of safety inputs and at least one safety actuator output, and wherein the at least one sub-module comprises a plurality of safety sub-modules that each have unique safety inputs and safety outputs that are communicated separately to the main module; or
wherein the plurality of sub-module characteristics include one or more of the following:
identifier information;
certification information;
total number of inputs and outputs associated with the at least one sub-module.

6. The elevator system of claim 1, wherein, once the at least one sub-module is in the recognized mode, the main module and the at least one sub-module periodically communicate input/output signal status, and in response to the main module determining that the at least one sub-module has failed to provide requested input/output signal status, the main module shuts down an associated safety output.

7. The elevator system of claim 1, wherein:
the detection mode is enabled at the main module and comprises a user input via the at least one activation tool to generate a random output; and
in response to the user repeating the random output, the main module enters the detection mode, and preferably
the user input comprises manual operation of an input device and the random output comprises a random pattern of illumination events.

8. An elevator system comprising:
a main safety module comprising one or more controllers, the main safety module operable in a configuration mode, a detection mode, and an elevator operation mode, wherein the main safety module has a plurality of safety inputs and at least one safety actuator output;
a plurality of safety sub-modules connectable to the main safety module in the configuration mode, wherein each sub-module has an initialization mode and a recognized mode, and wherein each safety sub-module has unique safety inputs and safety outputs that are communicated separately to the main safety module;
at least one activation tool selectively actuated by a user to activate the detection mode, and wherein:
in response to activation of the detection mode, the main safety module returns to the configuration mode and initiates communication with one safety sub-module of the plurality of safety sub-modules while in the initialization mode;
in response to communication from the main safety module, the one safety sub-module communicates a plurality of safety sub-module characteristics to the main safety module; and
in response to review and certification of the plurality of safety sub-module characteristics for the one safety sub-module, the main safety module accepts the one safety sub-module as an approved safety sub-module and the one safety sub-module enters the recognized mode.

9. The elevator system of claim 8, wherein each safety sub-module is connectable to the main safety module sequentially.

10. The elevator system of claim 8, wherein the configuration mode comprises an initial set-up or construction mode for an elevator, and wherein:
in response to all safety sub-modules entering the recognized mode, the main safety module enters the elevator operation mode wherein additional safety sub-modules are not permitted to be added; and
in response to the user selectively actuating the at least one activation tool, the main safety module exits the elevator operation mode and enters the detection mode to recognize an additional safety sub-module, and wherein in response to review and certification of the plurality of safety sub-module characteristics for the additional safety sub-module, the main safety module accepts the additional safety sub-module as an approved safety sub-module without requiring any software updates or hardware modification; or
wherein, once the one safety sub-module is in the recognized mode, the main safety module and the one safety sub-module periodically communicate input/output signal status, and in response to the main safety module determining that the one safety sub-module has failed to provide requested input/output signal status, the main safety module shuts down an associated safety output.

11. A method comprising:
providing a main module for an elevator that is operable in a configuration mode, a detection mode, and an elevator operation mode;
connecting one sub-module of a plurality of sub-modules to the main module when in the configuration mode, wherein the plurality of sub-modules have an initialization mode and a recognized mode;
selectively actuating at least one activation tool to activate the detection mode;
in response to activation of the detection mode, returning the main module to the configuration mode and initiating communication with the one sub-module while in the initialization mode;
in response to a communication from the main module, the one sub-module communicates a plurality of sub-module characteristics to the main module; and
in response to review and certification of the plurality of sub-module characteristics, the main module accepts the one sub-module as an approved sub-module and the one sub-module enters the recognized mode.

12. The method of claim 11, including connecting each sub-module to the main module in sequence.

13. The method of claim 11, including:
once all sub-modules are in the recognized mode, entering the elevator operation mode wherein additional sub-modules are not permitted to be added;
in response to a user selectively actuating the at least one activation tool, exiting the elevator operation mode and entering the detection mode to recognize an additional sub-module; and
in response to review and certification of the plurality of sub-module characteristics for the additional sub-module, accepting the additional sub-module as an approved sub-module without requiring any software updates or hardware modification; or
wherein, once the one sub-module is in the recognized mode, periodically communicating input/output signal status from the one sub-module to the main module and, and in response to a determination that the one sub-module has failed to provide requested input/output signal status, shutting down an associated safety output.

14. The method of claim 11, wherein the main module comprises a main safety module having a plurality of safety inputs and at least one safety actuator output, and wherein the plurality of sub-modules comprise a plurality of safety sub-modules that each have unique safety inputs and safety outputs, and including separately communicating safety inputs and safety outputs from each safety sub-module to the main module.

15. The method of claim 11, including:
enabling the detection mode at the main module via selective user input to the at least one activation tool to generate a random output; and
in response to a user repeating the random output, entering the detection mode.
